(19) Europäisches Patentamt
European Patent Office
Office européen des brevets

(11) EP 2 808 707 A1

(12) EUROPEAN PATENT APPLICATION

(43) Date of publication:
**03.12.2014 Bulletin 2014/49**

(51) Int Cl.:
***G02B 1/04*** *(2006.01)*

(21) Application number: **13170173.2**

(22) Date of filing: **31.05.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **DSM IP Assets B.V.**
**6411 TE Heerlen (NL)**

(72) Inventor: **The designation of the inventor has not yet been filed**

(74) Representative: **Hoogendam, Gerrie Christine**
**DSM Intellectual Property**
**Geleen Office**
**P.O. Box 4**
**6100 AA Echt (NL)**

# (54) Macromers comprising pendant polyoxazoline groups

(57) The invention is directed to a macromere comprising unit derived from a solixane diol, di-isocyantes and a diol comrpsing a pendent poly alkyl oxazoline group. The invention also relates to a process for the preparation of said macromers, and to that the use of said macromers. The amcromers according to the invention may be used in ophthalmic lenses. Films comprising the macromers according to the invention provide a surprisingly low modulus in combination with a high water content.



Printed by Jouve, 75001 PARIS (FR)

## Description

The invention is directed to macromers comprising siloxane groups and poly alkyl oxazoline groups, and to a process for the production of such macromers, as well as to the use of said macromers.

The macromers according to the invention may for example be used in ophthalmic lenses.

To design and select materials for contact lenses, many factors must be considered to optimize the physical, chemical and biological properties. Examples of these properties include oxygen permeability, wettability, lubricity, biocompatibility, physical strength, modulus, and optical requirements, to name just a few.

While patient comfort has driven the market use of these lenses, the usefulness of these lenses depends on both the physical properties (including oxygen transport and lubricity of the lens) as well as the amount of protein and lipid deposition on the lenses during wear. In a silicone hydrogel contact lens oxygen permeability, which has been correlated to lens comfort and eye health, can be successfully accessed by using designed silicone compounds while lubricity can be achieved by of the incorporation of different hydrophilic components. Different technologies exist today to present a final lens that has the optical clarity and the desired lubricity, with controllable modulus and high oxygen permeability in the silicone hydrogel lenses.

Due to their high oxygen permeability, silicone based materials have been used extensively over the last 10 years in silicone hydrogel contact lens manufacturing.

However, silicone is a hydrophobic material, and for this reason silicone contact lenses tend to develop a relatively hydrophobic, non-wettable surface in contact with a hydrophobic lens mold during the manufacturing. Compatibilizing of hydrophilic and hydrophobic components within silicone hydrogel formulations is critical for the manufacturing of optically clear wettable contact lenses. For instance, phase separation of hydrophobic silicone from hydrophilic components in the lens formulation may occur and also phase separation in the final lens saturated with aqueous media can occur. This has a negative effect on the optical clarity.

In addition lipid and protein have a high tendency to deposit on a hydrophobic surface and this can affect optical clarity as well as wear. Likewise, adsorption of unwanted components from the ocular tear fluid on to the lens material during wear is one of the contributory factors for causing reduced comfort experienced by patients. In addition, bacterial infections can potentially occur if lens care regimens are not followed for use of the lenses. The extent of undesirable adsorptions on the lens will determine the lens care needs for a specific lens and will impact on the duration the ophthalmic lens can be present in the eye.

To improve the hydrophilicity of the silicone based contact lenses many approaches have been used. These include introducing wetting agents, using hydrophilic monomers and synthesis of copolymers of silicone and the hydrophilic polymers and oligomers.

Various methods have been used to render the contact lens surface with sustained wettability and/or lubricity. Wettability and/or lubricity is a property that is critical to the wear comfort and cornea health. One of the common practices to increase the wettability is to add an internal wetting agent such as polyvinylpyrrolidone (PVP) or to alter the surface during plasma treatment, high energy irradiation and by applying a topical coating to obtain an extremely hydrophilic surface (See e.g., EP 713106A1, and EP 2089069A1). Plasma treatment can be effective for silicone hydrogel contact lenses, but it is costly and time consuming to use this approach. Topical coating can effectively alter the surface properties, but also introduces an additional step in manufacturing and is often complex in nature.

Others have tried to increase the surface wettability by adding hydrophilic monomers in the lens formulation. Ionic monomers such as acrylate or methacrylate with zwitter-ionic groups including sulfobetaine, carboxy betaine and carboxy betaine ester are highly hydrophilic. By the introduction of these groups it is possible to retain the tear film and to reduce lipid or protein deposition. However, these zwitter-ionic group-containing monomers are generally solid and dissolve extremely poorly in hydrophobic monomers, such as silicone monomers. These monomers will precipitate or phase separate from the monomer mixture and affect optical transparency.

Non-ionic hydrophilic monomers have been used to render a contact lens hydrophilic; examples of which include 2-hydroxyethyl methacrylate, N-vinyl pyrrolidone, and dimethylacrylamide. Other reactive monomers or prepolymers were also reported to provide internal wetting capability (see e.g., WO 2006039466). Careful balancing of these hydrophilic monomers with other components in the lens formulation is necessary, especially for silicone hydrogel lens formulations in order to balance oxygen permeability, wettability and other physical properties. Using these non-ionic hydrophilic monomers often has its limitation in optimizing the overall lens performance without sacrificing other properties one way or the other.

In the synthesis of copolymers one common approach has been to create copolymers often block copolymers of silicones and a hydrophilic polymer. The choice of hydrophilic polymer has tended to be polyethylene glycol (PEG) which is used due to its availability with hydroxyl and amine terminated groups that allow facile preparation of block copolymers..

A recent review by Tighe (Eye and Contact Lens 39, 3-11 (2013) noted two important trends in contact lenses in the last decade. These were the trend to lower modulus contact lens and increasing water content.

The water content has been mainly to improve the surface properties of the contact lens such as wetting but also hydration and helping the contact lens maintain hydration. In addition the use of hydrophilic polymers has been shown to reduce protein and lipid adsorption often the precursor events to contact lens associated infections. However the above mentioned properties have to be balanced against other important functional properties of the contact lens, an important one being oxygen permeability. Silicones are incorporated into contact lens for their oxygen permeability. One method to incorporate then is as a macromer component in the contact lens formulation. Often to allow good miscibility and processability the silicone is incorporated in the macromer along with a hydrophilic polymer as an amphiphilic macromer. Upon silicone incorporation into a copolymer there is a balance between effective crosslink density for low modulus and water content. This allows facile tuning of the hydrophilc properties via introduction of the hydrophilic polymer without having to change the crosslink density of the resultant network and thereby affecting the resultant modulus.

The macromer according to the invention comprises pendant groups comprising polyalkyl oxazoline groups. When used to prepare a film, this film shows surprising low modulus when compared to a film that is identical except for having been prepared from a macromers comprising pendant poly ethylene glycol (PEG) group while the film maintains about the same water content..

Polyoxazolines (POXs) have been promoted as alternatives to polyethyleneglycol (PEGs) and they have even been explored for use in contact lenses. In most cases they have been used a high molecular weight polymers that are mixed with silicone based macromers to form semi-interpenetrating networks as described in WO2004 081105 (J&J) and WO 2000 002937 (Cooper Vision). Macromers based on purely POX have been described by US 2002 0075448 (B&L) while a US 6039913 (Novartis) describes the synthesis of PDMS-co -POX methacrylate terminated macromers. However in both cases case the POX groups are in the backbone chain of the macromer.

We describe macromers with the POX polymers pendant to the macromer backbone and thereby conferring beneficial properties.

## BRIEF SUMMARY OF THE INVENTION

The invention relates to a macromer having the structure of formula (I) or (II) or (III) or (IV):

$$E_1\text{-[X-Sil]}_z\text{ -X-[[Y -[X -Sil] }_n]_m\text{-X -}E_2 \qquad (I)$$

$$E_1\text{ -[[Y -[X -Sil] }_n]_m\text{-X -Y-}E_2 \qquad (II)$$

$$E_1\text{-[X-Y]}_z\text{ -X-[Sil-[X -Y]}_n]_m\text{-X -}E_2 \qquad (III)$$

$$E_1\text{-Sil-[X-Y]}_z\text{ -X-[Sil-[X -Y]}_n]_m\text{-X -Sil-}E_2 \qquad (IV)$$

wherein

E1 and E2 are end groups containing at least one reactive double bond,
Y is a diol derived unit comprising at least one pendant POX group,
X is a unit derived from a diisocyanate,
Sil is a unit derived from a siloxane diol,
and wherein
m is an integer ranging from 1 to 50,
n is an integer ranging from 1 to 50, and
z is an integer ranging from 1 to 50.

The diisocyanate use in the preparation of a macromer according to the invention may be an aliphatic or aromatic diisocyanite. Preferebaly, the diisocyanate is an aliphatic diisocyanite.

The diol resulting in the Y unit comprises a backbone with an OH-group at either end, and pending from the backbone is a side group comprising a polyoxazoline group (POX) group. Such diol may also be referred to as an a $\alpha,\alpha$-diols.

The present macromers also include an embodiment where the pendant oligomeric or polymeric POX groups have a molecular weight ranging from 300 to 5000 g/mol.

The Sil unit is derived from a siloxane having a terminal OH-group at either end, and may comprises polydimethylsiloxane (PDMS) or other poly di alkyl siloxanes.

An exemplary macromer may have the following structure:

$E_1$-[X-$(Sil)_p]_n$ -X-[[Y -[X -$(Sil)_p]$ $_n]_m$-X -$E_2$ or

wherein at least one of E1 or E2 are hydroxyethylmethacrylate (HEMA),
Y is a unit derived from an α,α diol comprising a pendant poly(2-ethyl-2-oxazoline) or a poly(2-methyl-2-oxazoline) pendant group,
X is a unit derived from isophorone diisocyanate (IPDI),
Sil is derived from a polydimethylsiloxane (PDMS) diol , and
wherein m is a number ranging from 1 to 50,
n is a number ranging from 1 to 50,
p is a number ranging from 1 to 75.

The number average molecular weight of the total macromer may range from 4,000 to 50,000 g/mol.
The present disclosure is also directed to a method for the production of a macromer comprising:

a. Synthesis of an α,α diol comprising a pendant poly oxazoline group
b. reacting a diisocyanate with a polysiloxane diol under dry air or nitrogen gas at elevated temperature in the presence of a catalyst to form an intermediate;
c. react said intermediate with one or more diols derived from polyalkylene oxides, monoalkyl-substituted derivatives thereof, and copolymers thereof, under nitrogen with stirring in the presence of a catalyst to form a pre-polymer;
d. react said pre-polymer with a compound having at least one reactive double bond in the presence of a catalyst.

The synthesis of an α,α diol comprising a pendant polyoxazoline group is known, and has for example been described on page 10 and in Figure 7 of WO2009/058397, which is hereby incorporated by reference.
In a further method, the amount of the polysiloxane diol starting material used in the preparation of the macromer may range from 45-85% by weight of the total weight of the polysiloxane diol starting material and the α,α-diol comprising the pendant POX group used in the preparation of the macromer and the amount of α,α-diol comprising the pendant POX group may range from 15-55% by weight of the total weight of the polysiloxane diol starting material and the α,α-diol comprising the pendant POX group used in the preparation of the macromer.
The present methods may change the reaction sequence and order of addition. For instance a polymer within the scope of the present macromers may be formed by first reacting a (α,α-) diol comprising a pendant POX group with a diisocyanate t and chain extending the resultant prepolymer with a siloxane diol.. This alters the end group composition and forms a polymer where the unit comprising a pendant POX group is adjacent to the end group as opposed to the siloxane unit being adjacent to the end group.
The present macromers may be included in an ophthalmic lens formulation, or more specifically, a contact lens formulation.
The macromers can be made into formulations for contact lenses further comprising a silicone monomer and a hydrophilic monomer.
In a further embodiment, the present macromers are made into contact lenses comprising more than 10 wt% of a silicone hydrogel and the macromer according to any one of claims having a lubricity contact angle of less than 100 degrees and a water break up time of more than 1 second.

## BRIEF DESCRIPTION OF THE DRAWINGS

Figure 1 is an exemplary structure of the present macromer. We can also use the following structure

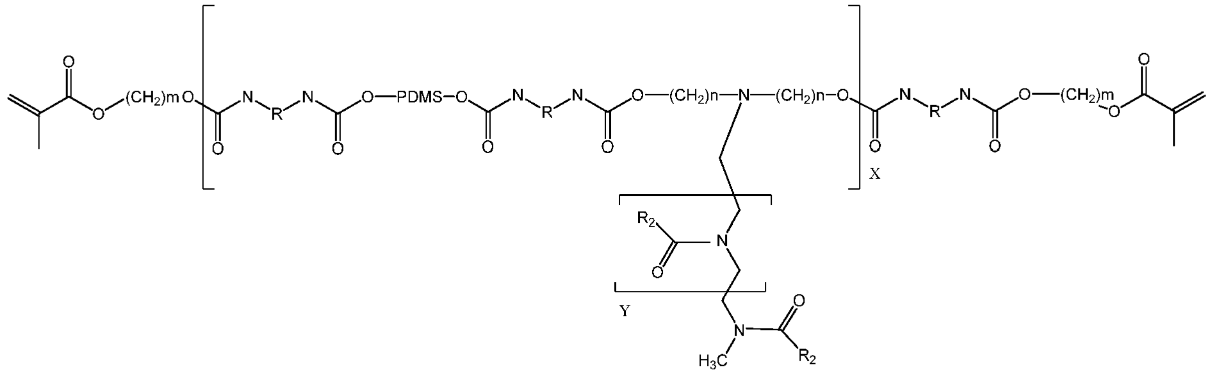

*Where*

M = 2-5 CH2 groups
PDMS range from 200 to 5000
Y allows a range in Mw from 500 - 5000
n = 2,
R is a divalent aliphatic or cyclo aliphatic group

**DETAILED DESCRIPTION OF THE INVENTION**

Unless defined otherwise, all technical and scientific terms used herein have the same meaning as commonly understood by one of ordinary skill in the art to which this invention belongs. Generally, the nomenclature used herein are well known and commonly employed in the art. In some instances, recognized by those in the art, conventional methods are used for laboratory procedures. Where a term is provided in the singular, the inventors also contemplate the plural of that term. The aim of the present invention is to provide a macromer suitable for use in ophthalmic lenses.

Depending on the order in which the various units are reacted with eachother, the macromers according to the invention have a structure of any one of formula's (I)(IV):

$$E_1\text{-[X-Sil]}_z\text{ -X-[[Y -[X -Sil] }_n]_m\text{-X -}E_2 \qquad (I)$$

$$E_1\text{ -[[Y -[X -Sil] }_n]_m\text{-X -Y-}E_2 \qquad (II)$$

$$E_1\text{-[X-Y]}_z\text{ -X-[Sil-[X -Y]}_n]_m\text{-X -}E_2 \qquad (III)$$

$$E_1\text{-Sil-[X-Y]}_z\text{ -X-[Sil-[X -Y]}_n]_m\text{-X -Sil-}E_2 \qquad (IV)$$

wherein

E1 and E2 are each independently end groups containing at least one reactive double bond,
Y is unit derived from a diol comprising at least one pendant POX group,
X is a unit derived from a diisocyanate ,
Sil is a unit derived from di alkyl siloxane diol,
and wherein
m is an integer ranging from 1 to 50,
n is an integer ranging from 1 to 50, and
z is an integer ranging from 1 to 50.

In the macromer according to the invention E1 and E2 each independently are endgroups containing at least one reactive double bond. Endgroups are functional groups that are located at the ends of the polymeric chain (i.e E1 and E2 are each present at one end of the macromere). The end groups E1 and E2 can be the same or different. The macromers according to the invention will form part of a contact lens formulation and are therefore the macromers comprise reactive groups that can react with the other constituents of the contact lens formulation. According to the invention the end groups are reactive groups that contain at least one reactive double bond. The double bond can, for example, be formed by an acryl or methacryl group and is formed on the ends of the polymeric chain by reaction of an isocyanate group with, for example, hydroxy acrylate, methacrylate or acrylamide. Examples of compounds used to

form endgroups E1 and E2 include but are not limited to hydroxyl ethyl (meth)acrylate, hydroxyl propyl (meth)acrylate, and hydroxy n-butyl (meth)acrylate or even hydroxyethylmethacrylamide . If excess diol is used in the last reaction step prior to end-capping, e.g. isocyanatoethyl (meth)acrylate can be used for end capping

In the macromer, Y is a diol derived unit comprising at least one pendant POX group.

During synthesis of the macromere according to the invention, the hydroxyl groups of the diols react with the isocyanate groups of the diisocyantes to form urethane bonds.

As known to one of skill in the art, a pendant group or a side group is generally a group of molecules arranged in linear or branched conformations and attached to a so-called "backbone"..

For the purpose of this invention, the pendant groups comprise a poly alkyl oxazoline.

such as polymethyl oxazoline (PMeOX), and polyethyloxazoline (PEtOx), and polyoxazolines (POX) comprising groups, copolymers thereof and their monoalkyl-substituted derivatives. The term "derived from" is intended to mean "made from" through single or multiple chemical reaction steps and the term "derivative" is intended to mean different examples or analogues of a general chemical composition. For instance the structure generally referred to as "POX diol" is provided below.

Optionally, the macromer according to the invention can be extended by the use of known chain extenders, Suitable diols for use as chain externders are for example butane diol, polycarbonate diol, hexane diol, and propane diol. As is known to a person skilled in the art, suitable chain extenders may also by di amines, in case where the chains the chain extender is to connect have isocyanate as an end group.

Formula 1

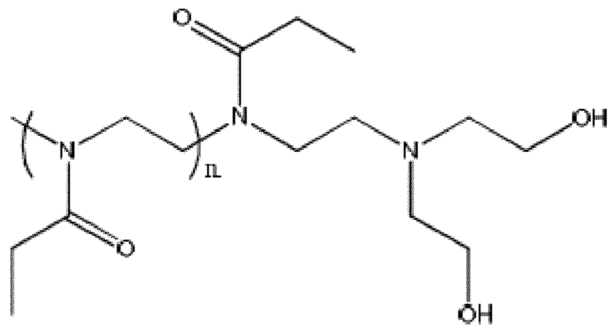

The pendant group in the diol Y in the macromer according to the invention comprises a polyoxazoline (POX) group.

For the purpose of this text, POX refers to an oligomer or polymer derived from ethyl or methyl oxazoline. An example of a suitable diol from which Y may be derived is shown in the figure above. The synthesis of such diol is described in e.g. WO2009/058397, page 10 and figure 7, which is incorporated by reference. Figure 1 shows a diol with a pendant polyethyloxazoline group. The amine diol used in synthesis of the diol with a pendant POX-group may be any dihydroxy secondary amine bearing moiety that is aliphatic or cyclo aliphatic.

The pendant group preferably has a molecular weight ranging from 300 to 5000 g/mol

In the macromer according to the invention X is a unit derived from a diisocyanate unit. The term "derived from" is intended to mean "made from" through single or multiple chemical reaction steps and the term "derivative" is intended to mean different examples or analogues of a general chemical composition. In the present instance, the uses of diisocyanates and the results of using diisocyanate in reactions with di-ols to obtain a urethane bond are generally well understood. The diisocyanates used in the preparation of the macromer according to the invention can comprise aromatic or aliphatic diisocyanates. The diisocyanates may be selected from the group comprising alkyl diisocyanates, arylalkyl diisocyanates, cycloalkylalkyl diisocyanates, alkylaryl diisocyanates, cycloalkyl diisocyanates, aryl diisocyanates, cycloalkylaryl diisocyanates, and mixtures thereof.

Examples of diisocyanates are isophorone diisocyanate, hexane diisocyanate, 1,4- diisocyanatocyclohexane, lysine-diisocyanate, naphthalene diisocyanate, 4,4'-diphenylmethane diisocyanate, hexamethylene diisocyanate, 2,4-toluene diisocyanate, 2,6-toluene diisocyanate, hexamethylene-1,6-diisocyanate, tetramethylene-1,4-diisocyanate, naphthalene-1 ,5-diisocyanate, xylylene diisocyanate, dicyclohexylmethane-4,4-diisocyanate, 1,4-benzene diisocyanate, 3,3'-diethoxy-4,4-diphenyl diisocyanate, m-phenylene diisocyanate, polymethylene polyphenyl diisocyanate, 4-isocyanatocyclo-4 ' -isocyanate, and mixtures thereof. Preferred are aliphatic diisocyanate units; more preferred are isophorone diisocyanate, 1,4-diisocyanatocyclohexane and mixtures thereof.

In the macromer according to the invention 'Sil' is a unit derived from an poly dialkyl siloxane diol , which diol

preferably comprises a poly di alkyl siloxane. S. Typically, the dialkyl solixane diol is a poly di methyl siloxane diol, but other poly di alky siloxane diols may also be used.

The number average molecular weight of the total macromere is ranging from 8,000 to 50,000 g/mol, preferably ranging from 15,000 to 30,000 g/mol and more preferably ranging from 17,000 to 27,000 g/mol.

To obtain the present macromer, a diisocyanate is reacted with a poly alkyl siloxane diol under nitrogen gas or dry air at elevated temperature. For instance, the maximum exothermic temperature is preferably less than 80 ° C to eliminate secondary reactions affecting the molecular weight and/or functionality of the resultant intermediate. More preferably the temperature is less than 75 ° C. The minimum temperature is generally 40 ° C, and the actual temperature is preferably about 55 ° C.

A catalyst is included in the diisocyanate-siloxane diol mixture. Exemplary catalysts include organometallic compounds based on mercury, lead, tin (dibutyltin dilaurate),tin octoate, bismuth (bismuth octanoate), and zinc or tertiary amines such as triethylenediamine (TEDA, also known as 1,4-diazabicyclo[2.2.2]octane or DABCO, an Air Products's trade mark), dimethylcyclohexylamine (DMCHA), and dimethylethanolamine (DMEA) or others known in the art may be added to the mixture. The amount of the catalyst may range from 0.01-0.04 wt %, preferably having 0.025 wt % based on the total weight of the reaction mixture. From this step, a diisocyanate-polysiloxane-diisocyanate intermediate is formed.

Next the diisocyanate-siloxane-diisocyanate mixture is reacted with one or more diols comprising a pendant polyoxazoline group, mixtures thereof, copolymers thereof and/or their monoalkyl-substituted derivatives (for ease of use below, referred to as "polyoxazolines"). The polyoxazoline may be neutralized to form a neutralized polyoxazoline -diol. The polyoxazoline -diol polymerizes with the diisocyanate-siloxane-diisocyanate intermediate under stirring, followed by addition of a catalyst to form a pre-polymer. The maximum exothermic temperature is preferably less than 80 ° C. More preferably the temperature is less than 75 ° C. The minimum temperature is generally 40 ° C, and the actual temperature is preferably about 55 ° C.

The diisocyanate-siloxane- polyoxazoline prepolymer is purged with dry air and reacted with and end-group forming compound, such as HEMA (hydroxyethyl methacrylate) and a catalyst. The temperature for this reaction is at least 35 ° C and the maximum temperature is less than 50 ° C to eliminate auto polymerization of the HEMA.

In the macromer the amount of siloxane unit may range from 45-85% by weight of the total weight of the siloxane unit and the polyalkylene oxide in the composition and the amount of polyoxazoline may range from 15-55% by weight of the total weight of siloxane unit and the polyoxazoline in the composition. More preferably the composition may include 75 ± 5 % by weight siloxane unit and 25 ± 5% by weight polyoxazoline. In another embodiment, the composition may include 50 ± 5% by weight siloxane and 50 ± 5 % by weight polyoxazoline.

Overall the present methods include a polyurethane synthesis that permits reactant ratios and order of addition to be modified to control composition and molecular weight. Urethane bonds are formed through (or derived from) a reaction of a diol comprising a pendant POX group or siloxane diol with the diisocyanate. In this case the reaction sequence described above can be altered by first reacting the diol comprising the pendant POX group with the diisocyanate unit and chain extending the resultant prepolymer with the siloxane diol.. This alters the end group composition, forming a polymer where POX would be adjacent to the end group as opposed to the siloxane unit being adjacent to the end group. It is also possible to alter the component ratio so the remaining group is a hydroxyl group instead of an isocyanate group. This allows an isocyanate end group such as isocyanatoethyl methacrylate (IEM) to be incorporated as the reactive double bond end group.

The number and molecular weight of diols: The hydroxyl number of the diols is determined using ASTM D4274: Standard Test Methods for Testing Polyurethane Raw Materials: Determination of Hydroxyl Numbers of Polyols or using the phosphorous NMR as indicated in the examples. Isocyanate content in the polymer and prepolymers was determined by titration using ASTM D2572: Standard Test Methods for Isocyanate Groups in Urethane Materials or Prepolymers

Molecular weights of polymer: The molecular weights for all polymer samples are determined using guidelines set in ASTM D5296: Standard Test Method for Molecular Weight Averages and Molecular Weight Distribution of Polystyrene by High Performance Size-Exclusion Chromatography. Gel Permeation Chromatography (GPC) weight average molecular weight (Mw) and GPC number average molecular weight (Mn) in g/mol and the polydispersity index (PDI=Mw/Mn) of the macromers were determined using polystyrene standards and tetrahydrofuran (THF) as the solvent at 30°C. GPC weight average molecular weight (Mw) and GPC number average molecular weight (Mn) in g/mol and the polydispersity index (PDI=Mw/Mn) of the macromers were determined by Gel Permeation Chromatography (GPC) using polystyrene standards and N,N-dimethylformamide (DMF) as the solvent at 80 ° C.

Macromers of the present invention are water processable and have moderate Dk, producing contact lenses which have increased oxygen permeability and increased lubricity. Without being bound by any particular theory, it is believed that when the block co-polymers of the present invention are activated in the presence of an ultraviolet source and optionally in the presence of one or more other monomers or macromers, the block co-polymer of the present invention forms a crosslinking moiety.

The inclusion of the block co-polymers as crosslinking moieties is believed to lead to the improved characteristics

of water processability and moderate Dk during lens fabrication, and increased oxygen permeability and increased lubricity in contact lenses made using the block co-polymers.

The term lens includes, but is not limited to ophthalmic lenses, soft contact lenses, hard contact lenses, intraocular lenses, overlay lenses, ocular inserts, optical inserts, spectacle lenses, goggles, surgical glasses and the like. In a preferred embodiment the lens is a contact lens and more preferably a soft contact lens. Soft contact lenses are made from hydrogels and silicone elastomers or hydrogels, which include but are not limited to silicone hydrogels. "Silicone hydrogel" refers to a silicone-containing polymeric material which can absorb at least 10 percent by weight of water when it is fully hydrated and is obtained by copolymerization of a polymerizable composition comprising at least one silicone-containing vinylic monomer or at least one silicone-containing macromer or at least one crosslinkable silicone-containing prepolymer.

A person skilled in the art may make silicone hydrogel contact lenses, e.g., by cast-molding in molds of a lens formulation comprising at least a silicone containing monomer or polymer, at least one hydrophilic monomer or macromer, and other necessary components. According to the invention, the hydrophilic component can be (in total or in part) the block co-polymer. The contact lenses can be made with an ultraviolet or thermally curable formulation for use in a contact lens will frequently have a hydrophilic component which is approximately 30-80% by weight of the total weight of the composition. The hydrophilic components may be DMA (Dimethylacrylamide), HEMA, or NVP (N-vinyl pyrrolidone). The silicone component may account for approximately 20-70% by weight of the total composition. When contact lenses are made using the present polymers, preferably the contact lens comprises at least 10 % silicone hydrogel and the present macromer. The silicone component may include TRIS (3-[tris(trimethylsilyloxy)silyl]-propyl methacrylate ), SIGMA methyl bis(trimethylsiloxy)silyl propyl glycerol methacrylate and/or polydimethlysiloxanes.

An ophthalmic lens may consist of the present macromers.. On the other hand, the present macromers may be incorporated into an ophthalmic lens as a crosslinker by reacting them with DMA and TRIS or SIGMA to form a partially polymerized product. The partially polymerized product is then functionalized with one or more compounds having at least one reactive double bond. Preferably, lenses made with the macromers according to the ivnention include at least 10 % by weight silicone hydrogel.

## Lubricity

Lubricity is the measure of the reduction of friction of a lubricant. An increased lubricity in a contact lens provides comfort to the wearer and decreases wear and tear on the lens during its use. To indirectly measure lubricity, the water contact angle and/or the water break up time may be used.

A "water contact angle" refers to a water contact angle (measured by Sessile Drop method), which is obtained by averaging measurements of at least 3 individual contact lenses. Lenses made with the present macromers generally have a water contact angle of less than 100 °, but preferably have a water contact angle of 15° to 70°.

## Water Film Break-up-time (WBUT) Test.

WBUT stands for water film break-up-time that is used to contribute to determining the wettability of a lens. WBUT means the amount of time, in seconds, that takes for dry spots to appear on the surface of a lens after it has been removed from water. Prior to testing, a lens is soaked in 3 ml of fresh PBS for at least 24 hours. Immediately before testing, the lens is shaken to remove excess PBS, and the length of time in seconds that it takes for the water film to recede from the lens surface is determined (e.g., water break up time (water BUT, or WBUT)). The water film break of time measured from lenses made using the present polymers is generally at least 1 second and preferably at least 5 seconds.

## Water Processability

Obtaining water processable formulations is a goal of the contact lens industry as it reduces cost as well as organic solvent waste from both the lens manufacturing and the clean-up associated with the post-manufacturing. It also eliminates processing time since the transition to a contact lens solution from an organic solvent is eliminated. Residual organic solvent is eliminated as a potential problem in the final lens and eye safety. The present macromers assist in this goal by not needing organic solvents for clean-up or manufacturing.

## Oxygen permeability

The intrinsic "oxygen permeability", Dk, of a material is the rate at which oxygen will pass through a material. In accordance with the invention, the term "oxygen permeability (Dk)" in reference to a material or a contact lens means an apparent oxygen permeability which is measured with a sample (film or lens) of 90 or 100 microns in average thickness

over the area being measured according to a coulometric method described in Examples. Oxygen permeability is conventionally expressed in units of barrers,

Oxygen Permeability Measurements. The oxygen permeability of a lens and oxygen transmissibility of a lens material may be determined according to a technique similar to the one described in U.S. Pat. No. 5,760,100 and in an article by Winterton et al., (The Cornea: Transactions of the World Congress on the Cornea 111, H. D. Cavanagh Ed., Raven Press: New York 1988, pp 273-280), both of which are herein incorporated by reference in their entireties.

The oxygen permeability of contact lenses made using the present polymers is 40 barrer to 150 barrer, preferably 60 barrer to 90 barrer.

The "oxygen transmissibility", Dk/t, of a lens or material is the rate at which oxygen will pass through a specific lens or material with an average thickness of t [in units of mm] over the area being measured. Oxygen transmissibility is conventionally expressed in units of barrers/mm.

Although various embodiments of the invention have been described using specific terms, devices, and methods, such description is for illustrative purposes only. The words used are words of description rather than of limitation. It is to be understood that changes and variations may be made by those skilled in the art without departing from the spirit or scope of the present invention, which is set forth in the following claims. In addition, it should be understood that aspects of the various embodiments may be interchanged either in whole or in part and/or be combined in any manners. Therefore, the spirit and scope of the appended claims should not be limited to the description of the preferred versions contained therein.

<u>EXAMPLES</u>

<u>Example 1. Synthesis and characterisation diol comprising a pendant POX group, i.c. α,α -PEtOx diol</u>

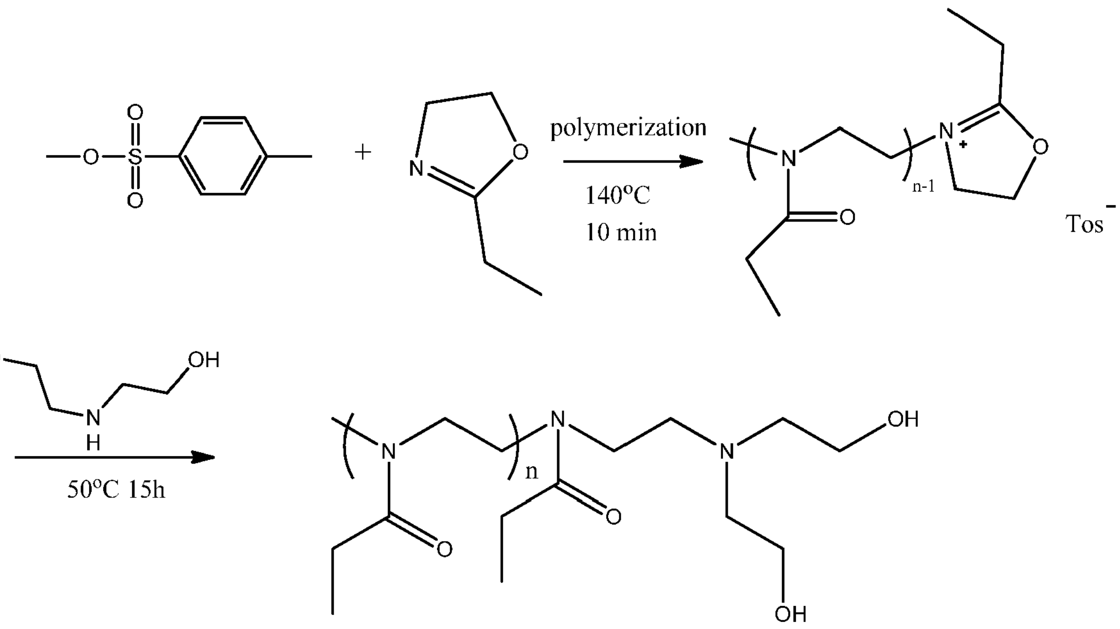


<u>Raw material preparation/ materials and methods:</u>

Methyl p-toluenesulfonate and 2-ethyl-2-oxazolines were distilled prior to use and store under $N_2$. Acetonitrile was dried over molecular sieves (3A). A Biotage I nitiator microwave synthesizer was used in these reactions.

GPC measurements were performed on a recorded on a Styragel HR5E and Styragel HR2 with a guard column at 50°C and using THF with a flow rate of 1.0ml/min as a solvent with polystyrene calibration standards with a Waters RI detector type 2414.

Proton and $^{31}$P NMR using on polymers was performed with CDCl3 as solvent with a Bruker Avance 300 MHz Ultrashield instrument.

Synthesis

Methyl p-toluenesulfonate (1, 0.677g, 3.16mmol) and 2-ethyl-2-oxazoline (2, 3.965g, 40.01 mmol) were transfered to 20 mL pre-dried microwave vials under nitrogen. Anhydrous acetonitrile (5.96mL) was added to the viall. The vial was capped and placed in the autosampler of the microwave. After 10 s pre-stirring, the reaction solution was heated to 140 °C and left to react for 10 min. The vial was cooled to the room temperature after completion. The reaction solution containing oligomer (3) was quenched by addition of diethanolamine (4,, 0.665g, 6.33mmol) to the reaction mixture. The mixture was then heated at 50°C for 15h. After cooling to room temperature, the solvent was removed under reduced pressure. The residue was dissolved in 50 ml $CH_2Cl_2$ and washed twice by brine (2x 75mL). The organic layer was dried in $Na_2SO_4$ and evaporated to yield PEtOx as a white power (70%). The product was characterized by THF GPC using PS standards, $^1H$ NMR and $^{31}P$ NMR. The resulting polymer had an Mn of 772, a polydispersity of 1.12 and a degree of polymerization of 10. The OH-end functionalization as obtained by $^{31}P$ NMR method for determining OH group (A. Granata et. al J. Agric. Food Cbem. 1995, 43, 1538-1 544) is 99%.

The OH group determination for the POX based building blocks was performed using 31 ZP NMR as described by Granata (J. Agric. Food Cbem. 1995, 43, 1538-1 544) and with cyclohexanol an internal standard and with a delay time of 3 secs and 128 scan setting for the NMR spectroscopy measurements.

**Example 2: Synthesis of a methacrylate terminated macromer**

The macromers according to the invention can be prepared by the following methods.

**Raw Material Preparation:**

Shin-etsu X22-160AS polydimethylsiloxane diol (an exemplary PDMS diol) is potentially degassed under high vacuum (< 2 torr) at elevated temperature 70-80 ° C and the collected PDSM diol is stored under nitrogen. Isophorone Diisocyanate (IPDI) is distilled under high vacuum (< 2 torr) at 100-120 ° C. the collected IPDI is stored under Nitrogen.

Dibutyltin dilaurate (DBTDL), and Hydroxyethyl Methacrylate (HEMA) were used as received.

GPC measurements were performed on a Waters 150-C ALC/GPC gel permeation chromatograph. Fitted with Phenomenex Phenogel Columns: set of three 10 μm: 100 A, 104 A, 106 A, 300 x 7.8 mm, Model 305 Platform equipped with integrated temperature control to 80°C of columns. It using DMF with a flow rate of 1.0ml/min as a solvent with PMMA calibration standards with a Viscotek Refractive Index detector

**Example 2a Synthesis of the methacrylate terminated macromer comprising pendant polyethyl oxazoline groups and units derived from polydimethylsiloxane (PDMS) (molar ration of siloxane diol and diol comprsing pending POX grousps of of 75:25)**

**Step 1: Reaction of IPDI with PDMS diol**

A 250 mL RB flask was used as a reactor that was heated to 60 °C with a silicone oil bath on a hot plate. 20 g of PDMS diol, Shinetsu X22 160AS, was charged into the reactor. The reaction was blanketed with nitrogen gas. 7.3 g of IPDI was added into the reactor under magnetic stirring, followed by addition of 5 uL of dibutyltin dilaurate. The reaction ran for 2 hours at 60 °C.

**Step 2: Reaction of IPDI-PDMS-IPDI with the diol from Example 1.**

5.8 g of diol as prepared in Example 1 was dissolved in 40 mL of anhydrous THF in a container. The above solution was added into the reactor to polymerize with the intermediate from step 1 under magnetic stirring, followed by addition of 5 uL of dibutyltin dilaurate. The reaction ran for 4 hours at 60 °C.

**Step 3: Endcapping of the reaction product from step 2**

Nitrogen gas blanket was switched to dry air purging. The temperature of the oil bath was lowered to 40 °C. Another 40 mL of anhydrous THF was added to the reation. 2 g of HEMA containing 10 mg of BHT was added to the reactor, followed by addition of 5 uL of dibutyltin dilaurate. The reaction ran overnight at 40 °C. The reaction was monitored by FTIR and GPC testing.

**Example 2b Synthesis of the methacrylate terminated macromer, starting from a molar ration of siloxane diol and diol comprising pending POX groups of 50:50**

**Step 1: Reaction of IPDI with PDMS diol**

A 250 mL RB flask was used as a reactor that was heated to 60 °C with a silicone oil bath on a hot plate. 10 g of PDMS diol, Shinetsu 160AS, was charged into the reactor. The reaction was blanketed with nitrogen gas. 4.55 g of IPDI was added into the reactor under magnetic stirring, followed by addition of 5 uL of dibutyltin dilaurate. The reaction ran for 2 hours at 60 °C. If necessary, the reaction was monitored by FTIR and GPC testing.

**Step 2: Reaction of IPDI-PDMS-IPDI with the diol of Example 1**

7.93 g of a diol obtained as described in Example 1 was dissolved in 40 mL of anhydrous THF in a container. The above solution was added into the reactor to polymerize with the intermediate from step 1 under magnetic stirring, followed by addition of 5 uL of dibutyltin dilaurate. The reaction ran for 4 hours at 60 °C. If necessary, the reaction was monitored by FTIR and GPC testing.

**Step 3: Endcapping of the reaction product from step 2**

Nitrogen gas blanket was switched to dry air spurging. The temperature of the oil bath was lowered to 40 °C. Another 40 mL of anhydrous THF was added to the reaction. 0.64 g of HEMA containing 5 mg of BHT was added to the reactor, followed by addition of 5 uL of dibutyltin dilaurate. The reaction ran overnight at 40 °C. The reaction was monitored by FTIR and GPC testing.

| Lot # | Molar ratios IPDI : PDMS diol: diol with pendant POX: HEMA | Reaction Temperature, °C for step 1, 2 and 3 resp. | Mn | PDI | PDMS : p-POX (weight ratio ) |
|---|---|---|---|---|---|
| 1120321 (p-POX) | 2.000 : 1.250 : 0.366 : 0.844 | 60-60-40 (oil bath) | 24096 | 1.8 | 75 : 25 |
| 1120327 (p-POX) | 2.000 : 1.250 : 0.366 : 0.844 | 60-60-40 (oil bath) | 27971 | 1.8 | 75 : 25 |
| 1120345.001 (p-POX) | 2.000 : 1.250 : 0.366 : 0.844 | 60-60-40 (oil bath) | 20184 | 1.7 | 75 : 25 |
| 1120345.002 (p-POX) | 2.000 : 1.250 : 0.366 : 0.844 | 60-60-40 (oil bath) | 19481 | 1.8 | 75 : 25 |
| 1120368 (p-POX) | 2.000 : 1.000 : 0.800 : 0.480 | 60-60-40 (oil bath) | 26802 | 2.1 | 50 : 50 |

**Comparative Experiment 3:Synthesis of the methacrylate terminated Macromers with pendant PEG-groups and a molar ratio of PDMS:PEG 75:25**

The reactions were carried out in bulk with no solvent. The PEG diol (YMER™ N120) was obtained from Perstorp.

**Step 1: Reaction of IPDI (isophorone Diisocyanate) with polydimethylsiloxane (PDMS) diol**

The temperature controller is set to the required temperature of less than 80 ° C, and preferably of around 55 ° C and heating is started. Nitrogen gas was turned on. 58.24 grams of PDMS diol (ShinEtsu X22 160A) is charged into the reactor. Stirring is turned on. 58.2 grams of IPDI is added into the reactor under stirring, followed by addition of 0.07 grams dibutyltin dilaurate.

The reaction is run for 2 hours at than 80 ° C as a maximum exothermic temperature and preferably at a set point of about 55 ° C. If necessary, the reaction is monitored by FTIR (Fourier Transform Infrared Spectroscopy) and GPC (Gel Permeation Chromatography).

**Step 2: Reaction of IPDI-PDMS-IPDI with a diol comprising pendant PEG groups**

59.7 grams neutralized YMER™ N120, is added into the reactor to polymerize with the intermediate from step 1 under stirring, followed by the addition of 0.07 grams dibutyltin dilaurate. The reaction is run for 2 hours at less than 80 ° C and around 55 ° C. If necessary, the reaction is monitored by FTIR and GPC testing.

**Step 3: Endcapping of the reaction product of step 2 with HEMA**

Nitrogen gas is switched to dry air, and the pre-polymer is purged for at least 30 min. Dry air is kept spurging. 5.73 grams of HEMA (containing 0.5%wt BHT (Butylated hydroxytoluene)) is added to the reactor, followed by addition of 0.07 grams of dibutyltin dilaurate. The reaction is run overnight at the required temperature. The temperature can range from 20 ° C - 50 ° C, but is preferably 35 ° C. The reaction is monitored by FTIR and GPC testing.

**Table 1. GPC Molecular Weight (Mn) and PDI Tested in DMF at 80 PMMA standard**

| Lot # | IPDI : PDMS :, PEG : HEMA | HEMA End Capping Mn | PDI | PDMS : p-POX (by weight) |
|---|---|---|---|---|
| No.1110392 | 2.000 : 1.250 : 0.366 : 0.844 | 16381 | 2.02 | 75:25 |
| | | | | |
| | | | | |
| | | | | |
| | | | | |

**Example 4: Model lens formulations made with Macromers**

For the purposes of comparison the comparative studies between macromers prepared using diols comprising pendant POX goups and diols comprising pendant PEG groups the samples from Lot 1120327 and Lot 1110392 respectively will be used.

In another embodiment, the macromers made above are combined with a hydrophilic monomer (HEMA, DMA, and cured and formed into hydrogel films . The reactive components used to prepare the films are reported as weight percent of all reactive components and the details of formulation are displayed in Table 2.

Hydrogel films based on the various macromeres were prepared using solvent casting method. Briefly, a macromers, HEMA, DMA,TEGDMA, and initiator Darocur 1173 and t-amylalcohol were mixed together with a stirring bar (see Table 2 for materials and amounts used). The final reaction mixtures were mixed at 20 °C for at least 3 hours until all of the components were dissolved. Then, the reaction mixture was injected via a syringe into a mold that was made of a quartz glass plate and a PE plate The dimensions of the mold is 120 mm (L)×50 mm (W) × 1 mm (T). The molds were then exposed to UV light (Nordson UV MAC) under the following conditions:

- Distance to lamp: 25 cm
- UV-lamp: H-bulb (300watts)
- UV-dose: 12-14J/$cm^2$ (300 sec exposure)
- Mold temperature right after curing 65°C.
- Time: 5 min

**Table 2 Summary of the formulation used for hydrogel films.**

| formulation | Comprising pendant POX groups | | Comprising pendant PEG groups | |
|---|---|---|---|---|
| | **wt.%** | **Grams** | **wt.%** | **Grams** |
| **HEMA** | 5.96 | 0.433 | 5.96 | 0.433 |
| **DMA** | 39.27 | 2.855 | 39.27 | 2.855 |
| **TEGDMA** | 5.65 | 0.411 | 5.65 | 0.411 |
| **Macromer with pendant POx** | 48.12 | 3.498 | | |

(continued)

| formulation | Comprising pendant POX groups | | Comprising pendant PEG groups | |
|---|---|---|---|---|
| | **wt.%** | **Grams** | **wt.%** | **Grams** |
| **Macromer with pendant PEG** | | | 48.12 | 3.498 |
| **Darocure 1173** | 1 | 0.073 | 1 | 0.073 |
| | | | | |
| **Total** | 100 | 7.269 | 100 | 7.269 |
| **t-amylalcohol** | 20.24 | 1.471 | 20.24 | 1.471 |

The films were cooled for 5 hours at -18°C and peeled from PE plate. Then the films were released from quartz glass, and dipped/extracted in a deionized water/isopropyl alcohol (IPA) mixture (5: 1 vol%) at 20 °C.

**Example 5: Equilibrium water content measurements**

All hydrogels made in Example 4 were immersed in DI water at 20 °C overnight before measurements. The % water content of the film was determined using the following equations:

$$\% \text{ water content} = 100\% * (Wt\text{-}Wo)/Wt$$

Where Wt is the weight of the fully hydrated film, and Wo is the weight of the dry film.
The data show that the PEG-PDMS hydrogel film contained 49.57% water by weight, while the POX-PDMS contained 51.4% water by weight. Similar water contents obtained from POX-PDMS and PEG-PDMS hydrogel films indicated that these two macromers have similar hydrophobicity.

**Table 3**

| samples | average water content |
|---|---|
| Film comprising macromer with pendant PEG groups | 49.57±0.32% |
| Film comprising macromer with pendant POX groups | 51.40±0.58% |

**Example 6: Experimental showing of oxidative stability of the formulations according to Example 4**

Oxidative stability was investigated with an accelerated test (3% H2O2 at 70°C) as described in ISO 10993-13: Biological evaluation of medical devices - Part 13: Identification and quantification of degradation products from polymeric medical devices. Treatments were done during 2 days after which chemiluminescence were determined. Chemiluminescence (CL) measurements were carried out on the luminometer Lumipol 3 produced at the Polymer Institute of SAS, Bratislava. This method allows determining polymer stability by measuring the intensity of the light emitted during thermal oxidation. The intensity of the emitted light (in counts/s) was recorded under a nitrogen flow rate of 25 ml/min and under non-isothermal conditions. Samples of approximately 5-15 mg were weighed onto aluminum pans with a diameter of 9 mm and put into the oven of the CL apparatus. After closing, the apparatus was flushed with nitrogen at 25°C for 30 minutes. After this period a temperature ramp of 10 °C/min , followed by cooling the sample to room temperature. The recording of the luminescence started after closing the apparatus. The results are expressed as the accumulated total light intensity up to 200°C in kHz per mg sample. Table 4 shows this accumulated total light intensity in kHz/mg as a function of treatment. The formulation comprising a macromer based on α,α-diols comprising pendant PEG groups exhibited stronger CL emission than the formulation based on α,α--diols comprising pendant POX groups after 2 days H2O2 treatment. This result indicates a significantly higher oxidative degradation of the PEG containing formulation than the POX based formulation. Therefore, the PEG containing formulation was more degraded than the POX containing formulation after the two days treatment in H2O2.

**Table 4 The total intensity of the light emitted from different formulations**

| | REF sample (kHz/mg) | After 2 days $H_2O_2$ (kHz/mg) |
|---|---|---|
| α,α POX | 31351±2965 | 53949±4518 |
| α,α PEG | 42103±4565 | 90068±14303 |

**Example 7: Comparative modulus of hydrogel samples**

Dynamic mechanical thermal analysis (DMTA) was performed to determine the modulus of the materials that were made in Example 4. Hydrogel films are equilibrated in DI water 24 hours prior to the measurement. The samples for the measurements were punched out of these films. For the measurements under wet conditions, the thickness of the film was measured with the calibrated Heidenhain thickness meter and the sample was mounted in the RSA equipped with submersible clamps. Prior to the measurements the samples were capped at room temperature in the submersible cell for saturation. The dynamic mechanical analyses were carried out in accordance with ASTM D5026 using a TA RSA-III test system at a frequency of 1 Hz and over a temperature ranging from 10 °C to 70 °C with a heating rate of 1 °C/min, and the results are shown in Table 6. The DMTA experiments showed the modulus of POX-PDMS at 34°C to be 2.06 MPa, which is lower than that of 2.50 MPa for PEG-PDMS hydrogel films.

**Table 5**

| | Modulus @34°C (wet) MPa |
|---|---|
| Sample made with macromer made with α,α-diol with pendant POXgroups | 2.06 |
| Sample made with macromere made with α,α diol with pendant PEG-groups | 2.50 |

Clearly, the high modulus values represent greater lens stiffness and greater resistance to shape change. POX-PDMS lens with a lower modulus is more likely to conform to the eye curvature, resulting in an improved contact lens comfort.

**Example 8. Comparative wetting studies**

All hydrogels made in Example 4 were dried before measurements.

Drying was performed in the vacuum oven under nitrogen at 80 °C for 16h. After drying, dry weight was recorded and hydrogel samples were then placed in climate chambers Vötsch industrietechniek type VC4018, with precisely controlled temperature and relative humidity. Temperature and humidity values are displayed and controlled by the software Simcon/32-Version 00.16. In all cases temperature was set to 23 °C.

The accuracy of temperature setting is +/- 1°C. water content of the hydrogels was -investigated at three different relative humidities: 50%, 85% and 92%. The accuracy of relative humidity setting is between 1-2%. Weight of the samples at different humidities wasrecorded gravimetrically. Samples were conditioned in the chambers until reaching equilibrium swelling at given humidity (until constant weight).

The equilibrium water content (EWC) at given humidity condition was calculated with the following equation:

$$EWC= [(M_{swollen}-M_{dry})/M_{swollen}]*100\ [\%]$$

Where $M_{swollen}$ is the equilibrium weight in swollen state and $M_{dry}$ is the dry weight of the sample. Sorption isotherm of different hydrogels is obtained by plotting EWC as function of relative humidity (Figure 4).It can be seen that the hydrogel comprising pendant POX groups has similar changes in water content as the hydrogel comprising pendant PEG-groups I during dehydration

**Example 9: Protein adsorption measurements**

The hydrogel films made in Example 4 were evaluated for protein uptake using bicinchoninic acid (BCA) assay according to the description provided by the manufacturer. Two films HEMA and HEMA/MAA (methylacrylic acid) were used in this work as reference samples. The components of the formulations used are displayed in Table 6. The curing conditions were the same as the conditions described in Example 4. The films were immersed in phosphate buffered saline (PBS) for 24 hours at 20°C. 12-mm diameter circular film samples were introduced into a lysozyme solution (1

mL of 1.9 mg/mL lysozyme from chicken egg white in PBS), and incubated at 37°C for 24 hours on an orbital shaker. To remove adhering protein solution, films were dropped into 10 mL PBS and gently blotted on lint-free bibulous paper. Protein adsorbed on and within the films was extracted for 22 hours into 2 mL of 0.1% trifluoroacetic acid: 50% acetonitrile: 49.9% water. Lysozyme concentration in this extraction solution was determined by MicroBCA analysis relative to lysozyme solutions of known concentrations and the results are shown in Table 7. The lower detection limit for the assay was 1 $\mu$g lysozyme per film sample.

**Table 6**

| Formulation | HEMA | | HEMA/MAA | |
|---|---|---|---|---|
| | wt.% | grams | wt.% | Grams |
| HEMA | 93.35 | 6.000 | 91.483 | 6.000 |
| MAA | | | 1.867 | 0.122 |
| TEGDMA | 5.65 | 0.363 | 5.65 | 0.371 |
| Darocure 1173 | 1 | 0.064 | 1 | 0.066 |
| Total | 100 | 6.427 | 100 | 6.559 |
| t-amylalcohol | 20.24 | 1.301 | 20.24 | 1.327 |

**Table 7**

| Samples | Protein deposition $\mu$g/film |
|---|---|
| HEMA | 3.60$\pm$0.82 |
| HEMA/MAA (ratios wt /wt | 513.24$\pm$23.96 |
| Comprising pendant PEG groups | 11.01$\pm$0.45 |
| Comprising pendant POXgroups | 13.23$\pm$2.86 |

From Table 7 it can be seen that sample with poly(methacrylic acid) exhibited the highest lysozyme deposition from electrostatic interactions. Both PEG-PDMS and POX-PDMS based hydrogel films resulted remarkable reduction of lysozyme deposition. Thus, POX-PDMS hydrogel film showed a similar effect in preventing protein absorption as PEG-PDMS hydrogel film.

Since the pendant POX-group is much shorter than a pendant PEG group with a similar molecular weight, it is surprising that films comprising macromers according to the invention show such low protein adsorption.

**Example 10: oxygen permeability studies**

Oxygen permeability was tested by following a standard test method from ASTM international (Designation D 3985-05). Test method covers the estimation of the steady-state rate of transmission of a gas through a sheet/film. The hydrogel films made in Example 4were immersed overnight in DI water before the measurement. The sample is mounted to form a barrier between two chambers of a gas transmission cell. One chamber contains the test gas at specified high pressure and in the other chamber permeating gas has been collected and brought to a detector. Knowing the surface of a sample, gas transmission rate can be calculated as the quantity of a given gas passing through a unit surface of a film in unit time under the test conditions. Testing of oxygen permeation of silicone hydrogels has been performed at a temperature of 34 °C and 95% relative humidity. Partial pressure of oxygen gas was 1 Atm. Oxygen permeability is calculated as a ratio of gas transmission rate and oxygen partial pressure multiplied by film thickness and the results are displayed in Table 8.

**Table 8**

| Material | Average Dk Barrer |
|---|---|
| With pendant PEG groups | 32.4 |
| With pendant POXgroups | 30.9 |

## Claims

1. A macromer having the structure of formula (I) or (II) or (III) or (IV):

$$E_1\text{-}[X\text{-}Sil]_z\text{ -}X\text{-}[[Y\text{ -}[X\text{ -}Sil]\ _n]_m\text{-}X\text{ -}E_2 \qquad (I)$$

$$E_1\text{ -}[[Y\text{ -}[X\text{ -}Sil]\ _n]_m\text{-}X\text{ -}Y\text{-}E_2 \qquad (II)$$

$$E_1\text{-}[X\text{-}Y]_z\text{ -}X\text{-}[Sil\text{-}[X\text{ -}Y]_n]_m\text{-}X\text{ -}E_2 \qquad (III)$$

$$E_1\text{-}Sil\text{-}[X\text{-}Y]_z\text{ -}X\text{-}[Sil\text{-}[X\text{ -}Y]_n]_m\text{-}X\text{ -}Sil\text{-}E_2 \qquad (IV)$$

wherein

E1 and E2 are endgroups containing at least one reactive double bond,
Y is a diol derived unit comprising at least one pendant POX group,
X is a unit derived from a diisocyanate ,
Sil is a unit derived from siloxane diol oligomer or siloxane diol polymer, and wherein
m is an integer ranging from 1 to 50,
n is an integer ranging from 1 to 50, and
z is an integer ranging from 1 to 50.

2. The macromer according to claim 1, wherein the diisocyanate is an aliphatic diisocyanate.

3. The macromer according to claim 1 or 2, wherein the pendant POX group comprises between 2 and 30 repeat alkyl oxazoline units.

4. The macromer according to claim 3, wherein the alkyl groups are either methyl and/or ethyl.

5. The macromer according to any one of claims 1-4, wherein
the siloxane unit consists or is derived from a polydimethylsiloxane diol.

6. A macromer according to a formula from claim 1, wherein
at least one of E1 or E2 are hydroxyethylmethacrylate (HEMA),
Y is unit derived from a diol comprising an oligomer or polymer derived from methyl or ethyl oxazoline
X is a unit derived from isophorone diisocyanate (IPDI),
Sil is a unit derived from polydimethylsiloxane diol (PDMS), and
wherein
m is a number ranging from 1 to 50,
n is a number ranging from 1 to 50, and
p is a number ranging from 1 to 75.

7. The macromer according to any one of claims 1-6, wherein the number average molecular weight of the total macromer is ranging from 4,000 to 50,000 g/mol.

8. A method for the production of a macromer according to any one of claims 1-7, comprising:

a. reacting a diisocyanate with a polysiloxane diol unit under dry air or nitrogen gas at elevated temperature in the presence of a catalyst to form an intermediate;
b. react said intermediate with one or more diols derived from POX, monoalkyl-substituted derivatives thereof, under nitrogen with stirring in the presence of a catalyst to form a pre-polymer;
c. react said pre-polymer with a compound having at least one reactive double bond in the presence of a catalyst.

9. The method of claim 8, wherein the amount of siloxane unit may range from 45-85% by weight of the total weight of polysiloxane and diol unit comprising POX in the composition and the amount of POX may range from 15-55% by weight of the total weight of polysiloxane and POX diol in the composition.

10. A contact lens formulation comprising a macromer according to any one of claims 1-8.

**11.** The contact lens formulation according to claim 10, further comprising a silicone monomer and a hydrophilic monomer.

**12.** A contact lens formulation comprising the macromer showing improved oxidative stability

**13.** A film comprising a macromer according to the invention showing reduced fouling.

Figure 1/4

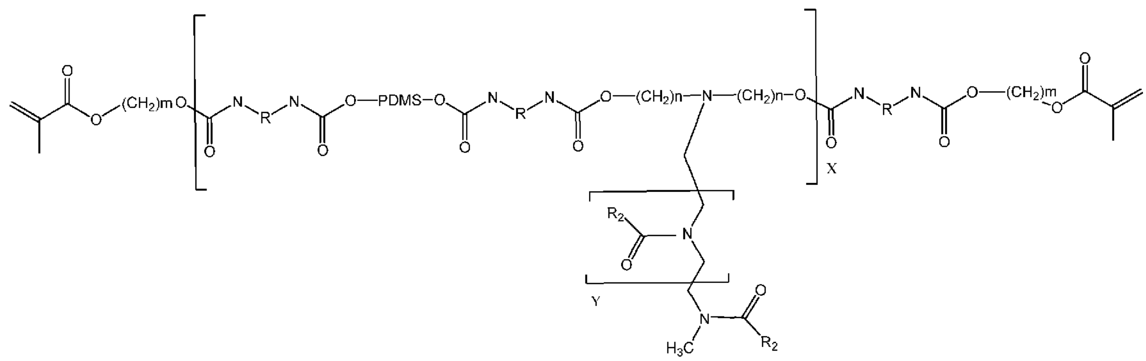

**Figure 2/4**

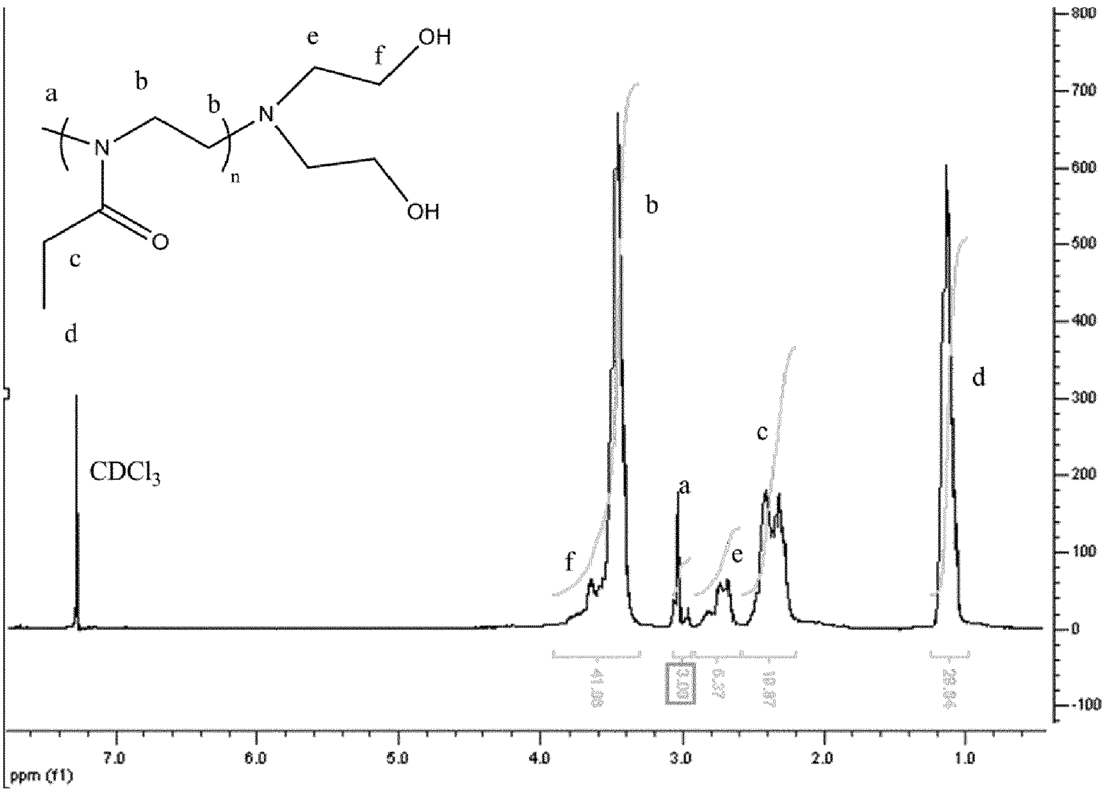
CDCl$_3$
f
b
a
e
c
d
800
700
600
500
400
300
200
100
0
-100
7.0
6.0
5.0
4.0
3.0
2.0
1.0
ppm (f1)

**Figure 3/4**

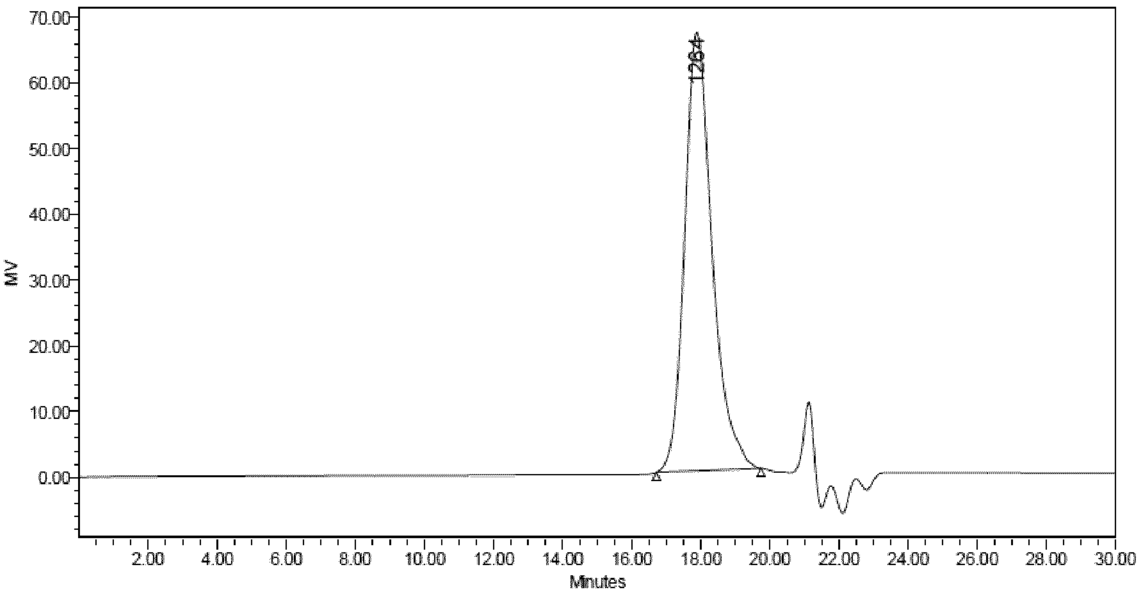


| | Peak Name | RT | Mn (Daltons) | Mw (Daltons) | Mz (Daltons) | MP (Daltons) | Mz/Mw | PDI | Area | % Area |
|---|---|---|---|---|---|---|---|---|---|---|
| 1 | Broad | 17.89 | 1072 | 1216 | 1344 | 1264 | 1.11 | 1.135 | 3699644 | 100.00 |
| 2 | | | | | | | | | | |

Figure 4/4

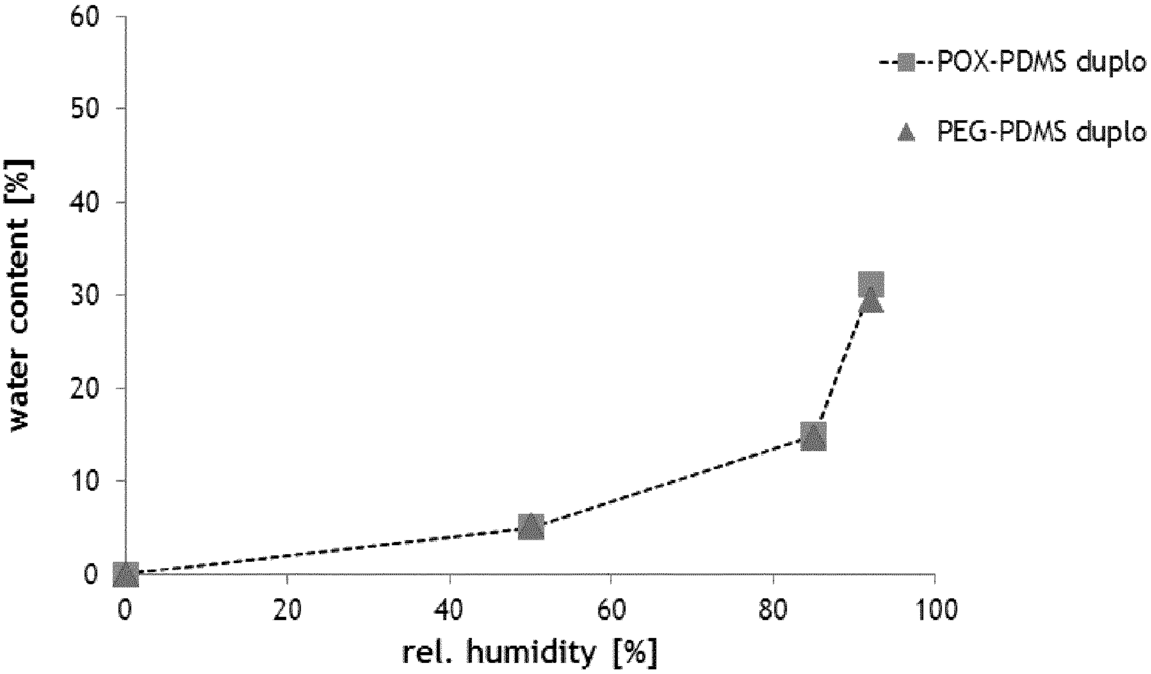
--■--POX-PDMS duplo
▲ PEG-PDMS duplo
water content [%]
rel. humidity [%]
0
10
20
30
40
50
60
0
20
40
60
80
100

European Patent Office / Europäisches Patentamt / Office européen des brevets

# EUROPEAN SEARCH REPORT

Application Number
EP 13 17 0173

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 2 270 551 A2 (NOVARTIS AG [CH]; COMMW SCIENT IND RES ORG [AU]) 5 January 2011 (2011-01-05) * example 1 * ----- | 1-12 | INV. G02B1/04 |
| Y | US 2010/267897 A1 (KENNEDY JOSEPH P [US] ET AL) 21 October 2010 (2010-10-21) * paragraphs [0002], [0008], [0057]; claim 24 * ----- | 1-12 | |
| | | | TECHNICAL FIELDS SEARCHED (IPC) |
| | | | G02B |

1

The present search report has been drawn up for all claims

| Place of search | Date of completion of the search | Examiner |
|---|---|---|
| Munich | 6 September 2013 | Buestrich, Ralf |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 13 17 0173

This annex lists the patent family members relating to the patent documents cited in the above-mentioned European search report. The members are as contained in the European Patent Office EDP file on
The European Patent Office is in no way liable for these particulars which are merely given for the purpose of information.

06-09-2013

| Patent document cited in search report | Publication date | Patent family member(s) | Publication date |
|---|---|---|---|
| EP 2270551 A2 | 05-01-2011 | EP 2270551 A2 | 05-01-2011 |
| | | EP 2270552 A2 | 05-01-2011 |
| US 2010267897 A1 | 21-10-2010 | CA 2704508 A1 | 07-05-2009 |
| | | CN 101896520 A | 24-11-2010 |
| | | EP 2207824 A1 | 21-07-2010 |
| | | US 2010267897 A1 | 21-10-2010 |
| | | WO 2009058397 A1 | 07-05-2009 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 713106 A1
- EP 2089069 A1
- WO 2006039466 A
- WO 2004081105 A
- WO 2000002937 A
- US 20020075448 A
- US 6039913 A
- WO 2009058397 A
- US 5760100 A

### Non-patent literature cited in the description


- **TIGHE.** *Eye and Contact Lens,* 2003, vol. 39, 3-11
- The Cornea: Transactions of the World Congress on the Cornea 111. Raven Press: New York, 1988, 273-280
- **A. GRANATA.** *J. Agric. Food Cbem.,* 1995, vol. 43, 1538-1 544
- **GRANATA.** *J. Agric. Food Cbem.,* 1995, vol. 43, 1538-1 544